# EUROPEAN PATENT SPECIFICATION

(11) **EP 2 028 804 B1**
(45) Date of publication and mention of the grant of the patent: **12.03.2014**
(21) Application number: 08706543.9
(22) Date of filing: 10.01.2008
(51) Int. Cl.: H04L 29/06

(54) **MEDIA DELIVERY SYSTEM, APPARATUS AND STREAM MEDIA PLAYING METHOD**
MEDIENLIEFERSYSTEM, VORRICHTUNG UND STREAM-MEDIENWIEDERGABEVERFAHREN
SYSTÈME DE DISTRIBUTION DE MÉDIA, APPAREIL ET PROCÉDÉ DE LECTURE DE MÉDIA EN CONTINU

(30) Priority: 03.04.2007 CN 200710089600
(43) Date of publication of application: 25.02.2009
(73) Proprietor: Huawei Technologies Co., Ltd., Longgang District, Shenzhen Guangdong 518129 (CN)
(72) Inventor: WANG, Zhibing, Guangdong 518129 (CN); YAN, Zhefeng, Guangdong 518129 (CN); DUI, Jiying, Guangdong 518129 (CN); CHEN, Haohua, Guangdong 518129 (CN); LI, Yaohui, Guangdong 518129 (CN); WEI, Jiahao, Guangdong 518129 (CN); XUE, Chuansong, Guangdong 518129 (CN)
(74) Representative: Haley, Stephen
(86) International application number: PCT/CN2008/070082
(87) International publication number: WO 2008/119267

(56) References cited:
- CN-A- 1 604 569
- CN-A- 1 812 566
- CN-A- 1 819 591
- CN-A- 1 909 509
- US-A1- 2002 040 479
- US-A1- 2003 204 602
- DONGYAN XU ET AL: "Analysis of a CDN-P2P hybrid architecture for cost-effective streaming media distribution" MULTIMEDIA SYSTEMS, SPRINGER, BERLIN, DE, vol. 11, no. 4, 1 April 2006 (2006-04-01), pages 383-399, XP019349225 ISSN: 1432-1882
- WAUTERS T ET AL: "Replica placement in ring based content delivery networks" COMPUTER COMMUNICATIONS, ELSEVIER SCIENCE PUBLISHERS BV, AMSTERDAM, NL, vol. 29, no. 16, 12 October 2006 (2006-10-12), pages 3313-3326, XP025090053 ISSN: 0140-3664 [retrieved on 2006-10-12]

## Description

### Field of the Invention

The present invention relates to communication technologies, and in particular, to a media delivery system and a method for playing streaming media.

### Background of the Invention

A content/media delivery network (CDN/MDN) has emerged in a prior art, delivering website contents from a source node to a network edge node closest to a user so that the user obtains desired contents from proximity, thus increasing the response speed when a user visits a website. For multimedia contents, such as video on demand (VoD) and live video, because video transport is in real time and large volume, delivering video contents to an edge node closest to a user assures better quality of playing for the user and significantly reduces impacts on the backbone network.

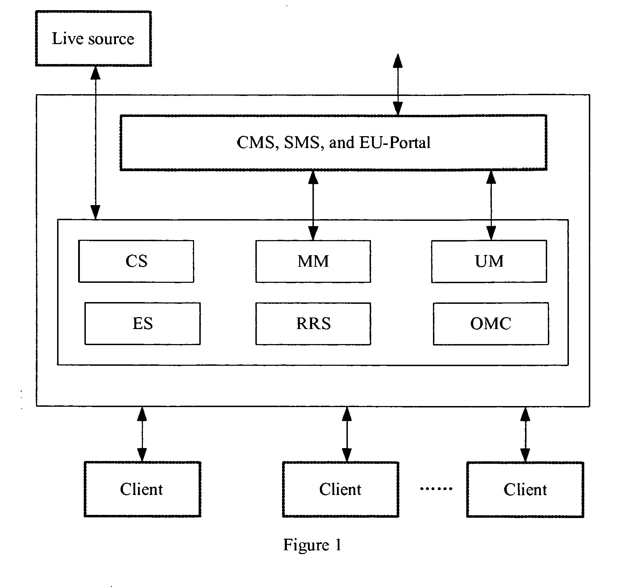

The structure of a CDN/MDN in the prior art is shown in Figure 1. The CDN/MDN includes:
(1) A media manager (MM), adapted to
   be a center for content delivery and scheduling;
   support publication and cancellation of on-demand, live, time-shifted and advertisement programs; and
   support intelligent delivery, intelligent deletion, pull and exchange of program contents.
(2) An end user portal (EU-Portal), functions of which mainly include:
   program presentation: displaying program contents to users via portal pages;
   login authentication: providing an interface for user login and logout and authenticating the identity of a user at the first login;
   program search: providing a content retrieval function to support search of program contents by category;
   ranking: supporting ranking of hot programs and ranking of programs by category;
   program recommendation: supporting a content/service provider (CP/SP) in recommending and promoting programs; and
   self service: logging, by a user, in to the portal to add, delete, query or modify personal attributes, or query programs the user orders.
(3) A content management system (CMS), functions of which mainly include:
   content management: providing management functions including content publishing and cancellation, entry of source data, content query, and attribute modification; and
   CP/SP management: providing management functions including user definition and user deletion.
(4) A service management system (SMS), functions of which mainly include:
   user management: defining, deleting and querying users and modifying user attributes;
   program management: creating, deleting and querying programs and modifying program attributes;
   product management: defining, canceling and querying products and service packages, and setting discounts;
   statistic analysis: making statistic analysis based on users, time segments, CPs/SPs or programs;
   rights management: defining system roles, defining and assigning rights, and querying and modifying role rights;
   system management: configuring, querying and modifying system parameters; and
   authentication and authorization: authenticating the identity of a user and the content usage and preventing theft links to contents.
(5) A request routing system (RRS), functions of which mainly include:
   ingress of user requests and scheduling center of the MDN;
   load balance based scheduling policies within an edge server (ES) group;
   resource assignment and resource-based scheduling for SPs; and
   static scheduling of users.
(6) A central server (CS), adapted to
   provide original data sources for ESs but normally not provide direct services for a user.
(7) An edge server (ES), adapted to
   provide streaming services for end users directly;
   provide streaming proxy;
   support streaming services like VoD, live video and time-shifted video; and
   monitor online and offline states of users and provide the usage mediator (UM) with evidence of user consumption.
(8) An operation management center (OMC), mainly adapted to:
   provide service configuration, device management and alarm management functions.
(9) A usage mediator (UM), adapted to screen different external authentication and accounting interfaces of the MDN and provide a uniform internal authentication and accounting interface of the MDN.

In the CDM/MDN shown in Figure 1, after a user request for video contents is redirected by the RRS to an edge autonomous system (AS), the ES in the edge AS streams unicast video to the user directly. Because streaming data is provided by the ES and the bandwidth on the ES is definite, the number of servable users is limited. To satisfy user needs, it is necessary that the capability of an edge node increases linearly with the growth of users. However, with the foregoing CDN/MDN structure in the prior art, investment in an edge node is huge. Because service requests of users are indefinite, even though the system capability of the edge node is increased, it is impossible to fully meet all abrupt rises of user requests. As a result, when concurrent user requests in an area exceed the maximum capacity of the network, the network can only deny the service.

At present, many pure peer to peer (P2P) steaming software systems are operating on the Internet. A common feature of these systems is that they are able to set up mutual help relations between clients via a scheduling module in the network. Streaming servers in the network provide only a few streams and clients (peer nodes) deliver streaming data to each other by means of the above mutual help relations so that a large number of clients can view streaming programs simultaneously. The scheduling module does not record topology relations of the network and the nodes help each other in a best effort way. The inventor finds that the P2P streaming software system in the prior art does not consider geographic issues, which may result in a large volume of traffic across the backbone network. Moreover, because the scheduling module does not record the topology relations of nodes and does not provide uniform resource scheduling, data delivery basically relies on the mutual help of nodes. Therefore, channel zapping takes a long time and programs of large bit streams cannot be supported. In addition, the unsteady programs and the best effort help mode may also result in unstable playing of programs.

US2003/204602 A1 discloses a multi-source peer content distribution system transfers content files from multiple, distributed peer computers to any requesting computer. The content distribution network coordinates file transfers through a mediation system including a content catalog and a host broker system. The content catalog contains an identification of each content file, the segmented subunits of each file, and the peer caches to which the subunits have been distributed. The host broker system receives content file requests issued over a network from requesting computers. In response, manifest files identifying the request corresponding content subunits and distributed cache locations are returned. The requesting computers can then retrieve and assemble the corresponding content subunits from the peer computers to obtain the requested content file.

US 2002/040479 A1 discloses a method for streaming content via a network to a receiver includes the steps of providing a plurality of streams to a plurality of different suppliers and receiving multiple streams from the different suppliers. The multiple streams together form the content.

Dongyan Xu et al., "Analysis of a CDN-P2P hybrid architecture for cost-effective streaming media distribution", MULTIMEDIA SYSTEMS, SPRINGER, BERLIN, DE, vol. 11, no. 4, 1 April 2006, pages 383-399, XP019349225 ISSN: 1432-1882, discloses a novel hybrid architecture that integrates both CDN- and P2P-based streaming media distribution. The architecture is highly cost- effective: it significantly lowers the cost of CDN capacity reservation, without compromising the media quality delivered. In particular, the Authors propose and compare different limited contribution policies for peers that request a media data, so that the streaming capacity of each peer can be exploited on a fair and limited basis. The Authors present: (1) in-depth analysis of the proposed architecture under different contribution policies, and (2) extensive simulation results which validate the analysis. The Authors' analytical and simulation results form a rigorous basis for the planning and dimensioning of the hybrid architecture.

Wauters T et al., "Replica placement in ring based content delivery networks", COMPUTER COMMUNICATIONS, ELSEVIER SCIENCE PUBLISHERS BV, AMSTERDAM, NL, vol. 29, no. 16, 12 October 2006, pages 3313-3326, XP025090053 ISSN: 0140-3664 [retrieved on 2006-10-12], discloses a set of distributed replica placement algorithms (RPAs), based on an Integer Linear Programming (ILP) formulation of the centralized content placement problem. These algorithms further enhance the Content Distribution Networks performance by optimizing the network and server load, reducing network delays and avoiding congestion. Although the proposed algorithms are designed for and tested on different network topologies, the Authors focus on robust ring based Content Distribution Networks in this study. Content placement on such a network topology can be calculated analytically and can be used for comparison.
In the prior art, the data is transmitted in whole network through P2P mode, and lots of data is transmitted via the backbone network, which makes a great impact on the backbone network. Moreover, when P2P clients in an area have concurrent requests, the whole network, including backbone network and P2P clients in different area, will be affected.

### Summary of the Invention

Embodiments of the invention provide a media delivery system, which adopts peer to peer (P2P) technology to improve the prior media delivery network and realizes playing of streaming media to a large number of clients. This object is solved by the methods according to claims 1 and 6 and the apparatuses and system according to claims 13, 14 and 15.

With the P2P technology, embodiments of the invention improve the content/media delivery network in the prior art. The new CS-P, ES-P and RRS-P, together with P2P clients, fully use the capabilities of the P2P client so that the system has better scalability to meet the concurrent play requests of a large number of clients and that the investment in edge servers is also reduced.

The media delivery system provided in an embodiment of the invention is also able to converge with the prior content/media delivery network so that the implementation cost is low.

### Brief Description of the Drawings

Figure 1 shows the structure of a CDN/MDN in a prior art;
Figure 2 shows the structure of a media delivery system according to an embodiment of the invention;
Figure 3 shows the interface protocols between components of a media delivery system according to an embodiment of the invention;
Figure 4 shows the structure of a CS-P provided in an embodiment of the invention;
Figure 5 shows the structure of an RRS-P provided in an embodiment of the invention;
Figure 6 shows the structure of an ES-P provided in an embodiment of the invention;
Figure 7 shows the structure of a P2P client provided in an embodiment of the invention;
Figure 8 shows a signaling procedure where contents of a P2P live channel are delivered according to an embodiment of the invention;
Figure 9 shows a signaling procedure where an ES-P obtains a live stream in P2P mode according to an embodiment of the invention;
Figure 10 shows a signaling procedure where content delivery of a P2P live channel is cancelled according to an embodiment of the invention;
Figure 11 shows a registration signaling procedure of a P2P client according to an embodiment of the invention;
Figure 12 shows a signaling procedure where a user chooses a live channel program according to an embodiment of the invention;
Figure 13 shows a signaling procedure where an idle P2P client requests to be a helper node according to an embodiment of the invention; and
Figure 14 shows a signaling procedure for detecting and reassigning helper nodes.

### Detailed Description of the Invention

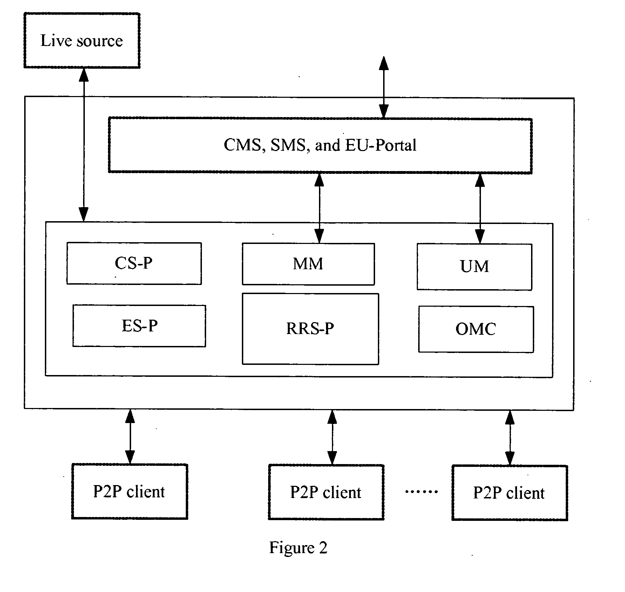

The structure of a media delivery system provided in an embodiment of the invention is shown in Figure 2. The system includes a content management system (CMS), a service management system (SMS), an operation management center (OMC), a media manager (MM), an end user portal (EU-Portal) and a usage mediator (UM), which are the same as those in a prior media delivery network (MDN). The system further includes a central server that supports P2P technology (CS-P), a request routing system that supports P2P technology (RRS-P), an edge server that supports P2P technology (ES-P) and a number of P2P clients.

The CS-P, ES-P and RRS-P provide additional P2P functions respectively on the basis of the CS, ES, and RRS in a prior MDN.

In the system, the CS-P, RRS-P and ES-P are in 1+1+N configuration, which means there is a pair of CS-Ps, a pair of RRS-Ps (two-node cluster hot backup) and multiple ES-Ps.

The RRS-P is the scheduling server of the system, which schedules P2P live requests, creates and maintains topology relations, provides a P-2P client with a peer list, and implements load balance based scheduling policies for ES-P groups.

The CS-P obtains live streams from live sources and slices live streams according to a P2P slicing rule. Then, the CS-P packs sliced data packets to a few more packetsthan original by using the redundant coding technology and sends the sliced data streams to the ES-P. Take a 1 Mbps bit stream for example. The traffic per second is sliced to 20 parts based on time and 22 packets are generated using the Reed-Solomon algorithm. This means the entire bit stream is sliced to 22 sub-streams, which are sent to the ES-P.

The ES-P provides data streams for P2P clients in push and pull mode or provides bandwidth compensation ability for some P2P clients.

A P2P client supports the P2P technology, adapted to present and play P2P programs. The P2P client is a trigger factor of P2P topology maintenance and serves other client nodes while viewing programs under organization of the scheduling server (RRS-P). Considering that the limited uplink bandwidth for an individual client in the case of asymmetric digital subscriber line (ADSL) access does not fully meet the need of mutual help, the system incorporates a helper node (detailed implementation to be described hereinafter). This means some clients do not actually view programs but stay online to receive some data, replicate the data and then deliver the data to other multiple clients in need of the data. For example, a client only receives an above mentioned sub-stream (50 kbps) and then delivers the sub-stream to the other four client nodes.

The media delivery system provided in an embodiment of the invention includes the following devices on the network side: operation support devices (SMS, SMS and EU-Portal), live source device (encoder), MM, UM, RRS-P, CS-P, and ES-P. From the networking perspective, the SMS, CMS, EU-Portal, encoder, MM, UM, RRS-P and CS-P are deployed in a central node, while the ES-P is deployed in an edge node as an edge server. When there are a large number of users in one edge node, multiple ES-Ps can be deployed in the node to serve the users.

The central node performs channel management, SP management, service presentation, content coding, content delivery, user scheduling, load balance, authentication and authorization, and topology maintenance for the P2P live service. The edge node completes data service of the P2P live service and performs data compensation for a P2P node.

From the aspect of device hardware, the SMS, CMS, and EU-Portal may operate on respective universal PC servers or share one advanced telecom computing architecture (ATCA) frame with the MM, OMC, UM, and CS-P. To save costs, the MM and OMC may share one ATCA board. The edge node adopts the universal PC server as the hardware server, one ES-P corresponding to one PC server.

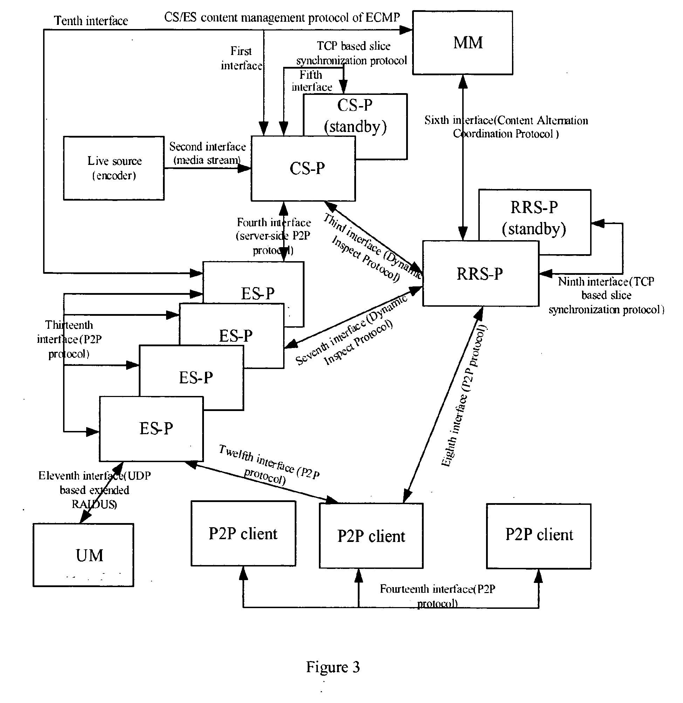

Figure 3 shows the interface protocols between components of a media delivery system according to an embodiment of the invention, including:

### (1) A first interface between CS-P and MM:

The first interface adopts the ES/CS Management Protocol (ECMP), which is a protocol between CS/ES and MM over the User Datagram Protocol (UDP).

The first interface carries interactive signaling between CS-P and MM based on UDP. When the CS-P obtains a P2P live channel from the live source encoder, which is equal to the effect that a P2P live channel is published to the CS-P, the MM needs to be notified that the P2P live channel is published to the CS-P. Upon reception of the message, the MM needs to add a record about the delivery of contents to the CS-P in the database. When one P2P live channel needs to be deleted, the MM notifies the CS-P to delete the local P2P live channel information according to the related record in the content delivery table.

### (2) A second interface between CS-P and live source encoder

The CS-P obtains streaming data packets after a live program is encoded via the second interface.

The second interface is related to the type of encoder, specifically:
When a Windows media video (WMV) live encoder is adopted, the output mode is usually WMV over HTTP; when an H.264 live encoder is adopted, the output mode is usually H.264 over TS over UDP. In WMV over HTTP mode, the CS-P acts as an HTTP streaming client to request data from the encoder; in H.264 over TS over UDP mode, the CS-P is able to receive a live data stream directly if it knows the output port of the encoder.

### (3) A third interface between CS-P and RRS-P:

The third interface is based on the Dynamic Inspect Protocol (DIP). The CS-P sends its load information to the RRS-P via the third interface for processing.

### (4) A fourth interface between CS-P and ES-P:

The fourth interface between CS-P and ES-P is a server-side P2P interface. The CS-P and ES-P exchange signaling and data via the fourth interface, specifically:
A P2P live channel may be published to the ES-P via the MM directly or the ES-P may be triggered by a user request to obtain P2P live data from the CS-P.

### (5) A fifth interface between active CS-P and standby CS-P:

In the media delivery system provided in the embodiment of the invention, the CS-P works in dual-node cluster hot backup mode. One CS-P acts as an active CS-P and the other CS-P acts as a standby CS-P. The fifth interface adopts the P2P slice synchronization interface protocol based on the Transmission Control Protocol (TCP) to keep data synchronization between the active CS-P and the standby CS-P.

### (6) A sixth interface between RRS-P and MM:

The sixth interface adopts the Content Alternation Coordination Protocol (CACP) to carry interactive signaling between RRS-P and MM over UDP, specifically:
When the MM initiates publishing, cancellation, or update of a P2P live channel, the active and standby RRS-Ps are notified via the sixth interface. In addition, when an RRS-P is faulty, the information is refreshed in the faulty RRS-P in real time. In this way, channel information is kept consistent between the active RRS-P and the standby RRS-P at any time.

### (7) A seventh interface between RRS-P and ES-P:

The seventh interface between RRS-P and ES-P adopts the DIP protocol to regularly synchronize the load information and resource assignment information of the ES-P. Therefore, the RRS-P stores the latest load and resource assignment information of the ES-P. In this way, the RRS-P is able to schedule ES-Ps in the autonomous system (AS) in load balancing mode. Meanwhile, the RRS-P can also detect the bandwidth consumption information of the ES-Ps in real time in the system so as to manage the lease of bandwidth. Because the ES-P is able to report load and resource assignment information simultaneously to the active and standby RRS-Ps, the load and resource assignment information in the active and standby RRS-Ps is kept consistent.

### (8) An eighth interface between RRS-P and P2P client:

The eighth interface between RRS-P and P2P client is a P2P signaling interface based on the P2P protocol. When a user requests to join or leave a channel, or requests to close a P2P client, or requests a new peer node, the request is sent to the RRS-P. The RRS-P adjusts the topology according to the requested operation. When the user selects a channel to view, the user is added to the topology tree of a certain channel in a certain AS. When the user leaves the channel or closes the P2P client, the RRS-P reschedules the user to a certain topology tree of the corresponding AS and then the RRS-P can adjust the topology.

### (9) A ninth interface between active RRS-P and standby RRS-P:

The ninth interface adopts a P2P topology synchronization interface protocol based on TCP to realize the data synchronization between the active RRS-P and the standby RRS-P.

When the standby RRS-P is recovered from a fault, the active RRS-P synchronizes the topology information in entirety to the standby RRS-P via the interface; when the topology information is consistent between both RRS-Ps, the topology adjustment due to a user's joining or leaving a channel is synchronized to the standby RRS-P as an increment value. With the topology synchronization interface, topology information is completely synchronized between the active and standby RRS-Ps so that users can be served uninterruptedly.

### (10) A tenth interface between ES-P and MM:

The ES-P and MM exchange signaling for live channel publishing and deletion via the tenth interface, specifically:
The interface between ES-P and MM is based on the ECMP protocol. When the ES-P obtains a P2P live channel from the CS-P, which is equal to the effect that a P2P live channel is published to the ES-P, the MM needs to be notified that the P2P live channel is published to the ES-P. Upon reception of the message, the MM needs to add a record about the delivery of contents to the ES-P in the database. When one P2P live channel needs to be deleted, the MM notifies the ES-P to delete the local P2P live channel information according to the related record in the content delivery table.

### (11) An eleventh interface between ES-P and UM:

The interface between ES-P and MM adopts the UDP based Remote Authentication Dial in User Service (RAIDUS) protocol to check the legality of programs consumed by a user, report accounting start/end and charging duration information, and measure and report P2P client contributed uplink bandwidth, ES-P compensated bandwidth, and peer node compensated bandwidth.

### (12) A twelfth interface between ES-P and P2P client:

The twelfth interface between ES-P and P2P client adopts the P2P protocol to implement quick caching of a start data stream, compensation of lost slices, caching of P2P slices, and exchange of streaming session description information. Via the interface, the P2P client also reports statistic information including the uplink bandwidth it contributes, compensated bandwidth obtained from the ES-P, bandwidth provided for it by other nodes, signaling traffic, and playing delay.

### (13) A thirteenth interface between ES-Ps:

When a P2P live channel already exists in a certain ES-P of an AS, other ES-Ps in the AS obtain data from the ES-P via the thirteenth interface in P2P mode instead of obtaining data from the CS-P.

### (14) A fourteenth interface between P2P clients:

P2P clients deliver data to each other via the fourteenth interface in P2P mode.

The above describes interfaces and protocols between components of the media delivery system provided in the embodiment of the invention in detail. With the above description, the functions of each component and the collaborations between components are clear.

The following describes the internal structures of the CS-P, RRS-P, ES-P and P2P client provided in embodiments of the invention.

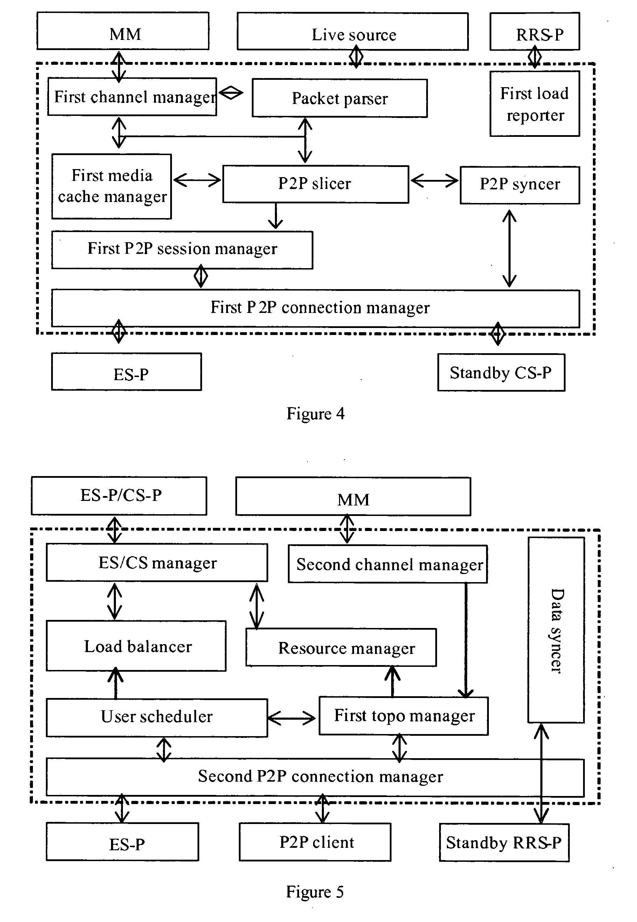

Figure 4 shows the structure of a CS-P provided in an embodiment of the invention, including:
(1) A first channel manager, adapted to record basic information of a live channel published by the MM via the first interface and add/delete live channels;
(2) A packet parser, adapted to obtain streaming data packets from a live source encoder via the second interface, parse the packets and analyze slice data synchronization points between the active CS-P and the standby CS-P, including:
   a transport stream parser (TS parser), adapted to parse H.264 over TS over UDP packets and analyze data synchronization points between active and standby CS-Ps;
   an HTTP client, adapted to set up WMV over HTTP streaming connections, parse packets, and analyze data synchronization points between active and standby CS-Ps;
(3) A first load reporter, adapted to collect and measure load information of CS-Ps and report the load information via the third interface;
(4) A first media cache manager, adapted to manage the caching of streaming data packets;
(5) A P2P slicer, adapted to slice obtained streaming data packets;
(6) A P2P syncer, adapted to synchronize slice information and data synchronization points of streaming data packets to the standby CS-P;
(7) A P2P session manager, adapted to maintain and manage connected users; and
(8) A first P2P connection manager, adapted to manage external interfaces of the CS-P, and set up, maintain and remove data and signaling channel.

Figure 5 shows the structure of an RRS-P provided in an embodiment of the invention, including:
(1) An ES/CS manager, adapted to detect faults of the connected ES-P and CS-P and record topology relations between ES-P and CS-P;
(2) A load balancer, adapted to calculate loads of ES-Ps and select an ES-P with lighter load;
(3) A user scheduler, adapted to receive a request for joining a live channel from a P2P client via the eighth interface, schedule the P2P client to the home area of the client, and invoke the load balancer to select the lightly loaded ES-P, and schedule the P2P client to the ES-P selected from the home autonomous system; also adapted to receive data requests initiated by the ES-P via the seventh interface with the ES-P and return address information of the CS-P or other ES-P nodes that can provide slice data;
(4) A first topo manager, adapted to maintain topology information between P2P clients and topology information between ES-Ps in the AS according to the scheduling result of the user scheduler and provide services for the P2P clients and ES-Ps;
(5) A resource manager, adapted to support resource lease mode, record operator occupied resources according to the topology information stored in the first topo manager, and check whether resources occupied by an operator exceed the upper limit;
(6) A second channel manager, adapted to obtain and record basic information of a live channel via the sixth interface, add/delete live channels and send the processing result to the first topo manager;
(7) A data syncer, adapted to communicate with the standby RRS-P via the ninth interface to implement synchronous information update between the active RRS-P and the standby RRS-P; and
(8) A second P2P connection manager, adapted to manage external interfaces of the RRS-P.

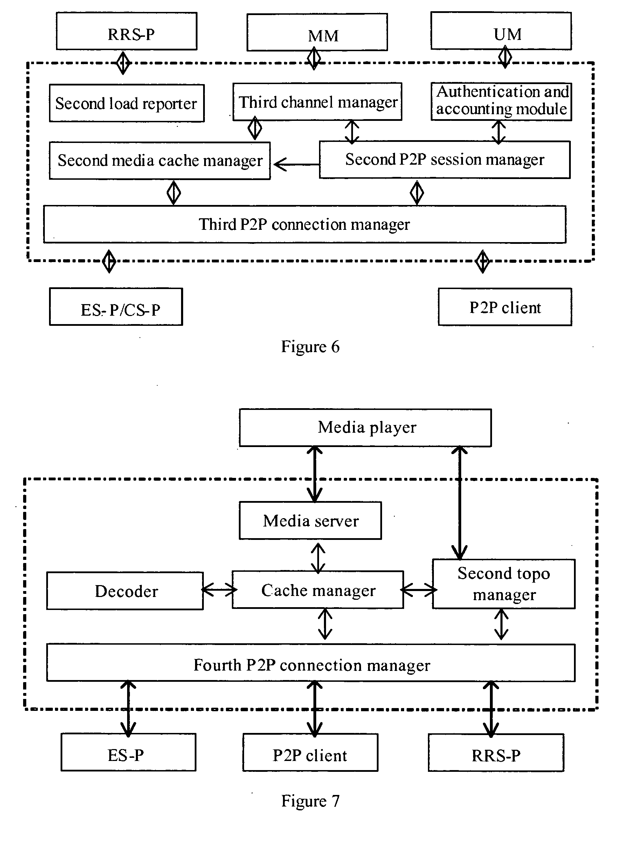

Figure 6 shows the structure of an ES-P provided in an embodiment of the invention, including:
(1) A second load reporter, adapted to collect and measure load information of ES-Ps and report the load information to the RRS-P via the seventh interface;
(2) A third channel manager, adapted to obtain and record basic information of a live channel via the tenth interface and add/delete live channels;
(3) An authentication and accounting module (A&A), adapted to authenticate the user identity of a connected P2P client, perform charging for live channel programs consumed by the user, and report the information to the UM;
(4) A second media cache manager, adapted to cache obtained slice data packets, receive a data request initiated by a P2P client, and send slice data to the P2P client;
(5) A second P2P session manager, adapted to maintain and manage connected users; and
(6) A third P2P connection manager, adapted to manage external interfaces of the ES-P, and set up, maintain and remove data and signaling channels.

Figure 7 shows the structure of a P2P client provided in an embodiment of the invention, including:
(1) A fourth P2P connection manager, adapted to manage external interfaces of the P2P client, and set up, maintain and remove data and signaling connections.
   Specifically, the fourth P2P connection manager is a bridge for interactions between the P2P client and the outside. It sends and receives all topology signaling information and media data of the ES-P, RRS-P and P2P client. It directly sets up, maintains and removes data and signaling channels. It also sends network address translation (NAT) traverse messages. The fourth P2P connection manager also manages mapping information of addresses and identifiers of the ES-P, RRS-P and P2P client; it provides the most basic data transport service for the second topo manager and cache manager by means of a message queue and the callback function registration mechanism. The goal of design is to support a large number of concurrent connections data transport and screen details of the lower layer network transport so that the cache manager and the second topo manager only care about which node they are communicating with, without knowing how data is transferred to the other end.
(2) A decoder, adapted to decode the obtained slice data, restore original data packets and send the data packets to the cache manager.
   Specifically, because media data is on the delivering side, N source data blocks are encoded to generate m (m>0) redundant data blocks by means of forward error correction (FEC) to improve the error tolerance capability of the system against packet loss and transport exceptions. The m redundant data blocks and the N source data blocks together constitute a transport group (TG) that contains N+m data packets. Relative positions of the data blocks in the TG are identified by numbering such as {0, 1, 2, ... N+m-1}. Because of the unreliable best effort service of a packet switched network, it is possible to lose some data packets in the TG during the transport process. The receiving end determines a lost data packet and its position in the TG according to the numbering. Due to redundancy, any N data packets in one TG may be used to reconstruct N source data packets. If the number of lost data packets is smaller than or equal to m, after the receiving end receives any N data packets of one TG, the receiving end may determine the relative positions of the lost packets according to the numbering information and perform FEC decoding to restore N original data packets.
(3) A cache manager, adapted to cache the decoded data packets and send the packets to a media server.
   Specifically, a buffer area of a proper size is set up, via which the cache manager provides stable uninterrupted media data streams for the media server, including initial quick caching from the ES-P, checking media stream integrity, supplying streams for the media server, actively obtaining lost data from the ES-P, restoring based on redundancy, checking sub-stream exceptions, and notifying the second topo manager of sub-stream exceptions.
(4) A second topo manager, adapted to monitor and adjust P2P connection status between itself and other network nodes, specifically including communicative interactions with the P2P client when joining the system.
   The P2P client needs to maintain connections with the RRS-P, ES-P and other P2P clients and process topology when the P2P client exits the system or detects that another P2P client connected to it exits the system or becomes unavailable. If the P2P client becomes a helper node, the P2P client also needs to monitor and adjust connections of it. When the P2P client occupies too many resources of the ES-P, the P2P client attempts to obtain sub-streams from other P2P clients in P2P mode and release resources of the ES-P.
(5) A media server, adapted to send streaming media data to a media player, which means processing connection requests of the media player and sending obtained streaming information to the media player to supply streams to the media player via HTTP.
(6) A media player, adapted to play a program according to the received streaming data. It may be a common media player, such as Microsoft Windows Media Player.

The following describes how the media delivery system provided in an embodiment of the invention is applied to play streaming media with reference to the accompanying drawings.

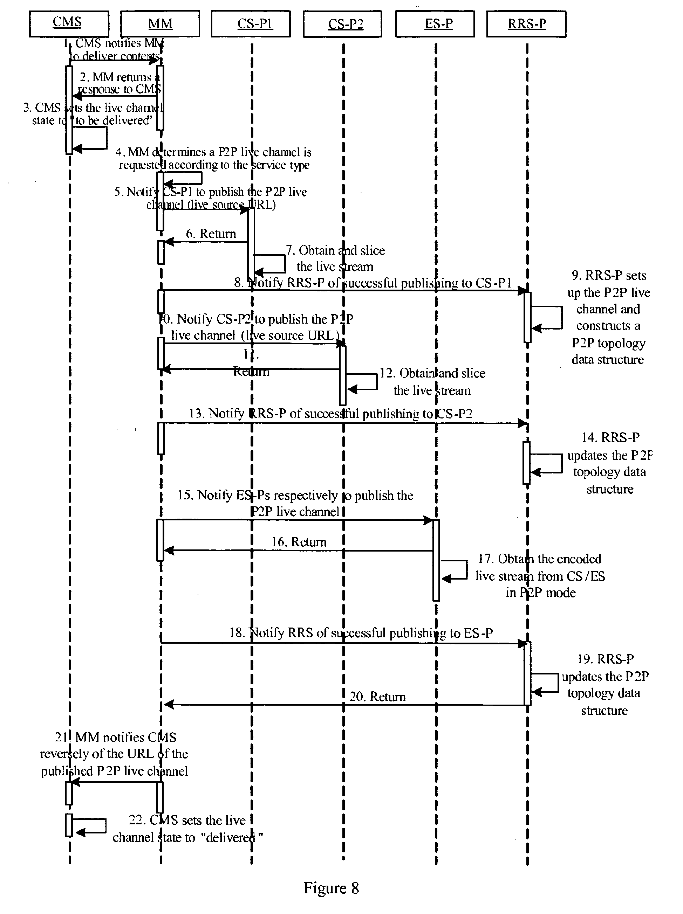

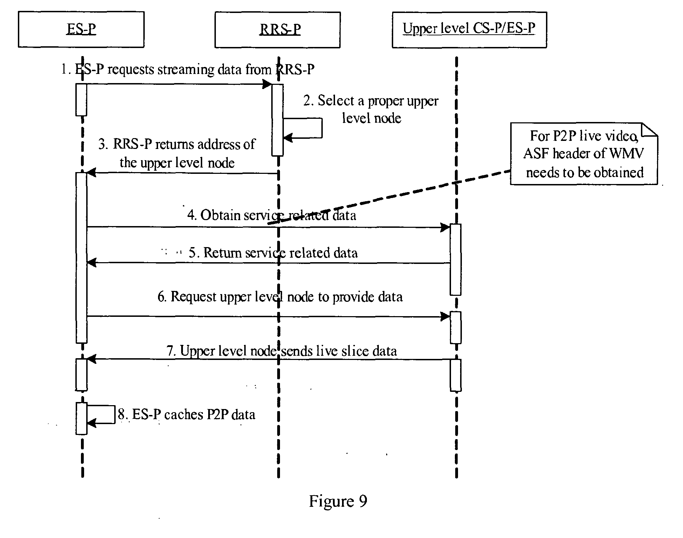

Figure 8 shows a signaling procedure where contents of a P2P live channel are delivered according to an embodiment of the invention. The procedure includes:
1. An operator logs in to the CMS, notifying the MM to deliver contents;
2. The MM returns a response to the CMS;
3. The CMS sets the live channel state to "to be delivered";
4. The MM determines a P2P live channel is requested according to the service type, and selects a device of the corresponding type;
5. The MM notifies the CS-P1 (active CS-P) to publish the P2P live channel, the notification message carrying address information of the live source, such as a uniform resource locator (URL) of the live source;
6. The CS-P1 returns the delivery result to the MM;
7. The CS-P1 obtains and slices the live stream;
8. The MM notifies the RRS-P that publishing to the CS-P1 is successful, and this step may be executed in parallel with step 7;
9. The RRS-P sets up a P2P live channel and constructs the P2P topology data structure of the channel;
10. The MM notifies the CS-P2 (standby CS-P) to publish the P2P live channel, the notification message carrying the ULR of the live source;
11. The CS-P2 returns the delivery result to the MM;
12. The CS-P2 obtains and slices the live stream;
13. The MM notifies the RRS-P that publishing to the CS-P2 is successful, and this step may be executed in parallel with step 12;
14. The RRS-P updates the P2P topology data;
15. The delivery of CS-P2 is successful. The MM notifies ES-Ps respectively to publish the P2P live channel;
16. The ES-Ps return respective publishing results to the MM;
17. The ES-Ps obtain the encoded live stream from the CS/ES (upper level node) in P2P mode (detailed steps are given in the procedure in Figure 9 where an ES-P obtains a live stream in P2P mode);
18. The ES-Ps notify the RRS-P of successful publishing, and this step may be executed in parallel with step 17;
19. The RRS-P updates the P2P topology data structure;
20. The RRS returns the result to the MM;
21. The MM reversely notifies the CMS of the URL of the published P2P live channel; and
22. The CMS sets the live channel state to "delivered".

With the procedure shown in Figure 8, a P2P live channel is published.

Figure 9 shows a signaling procedure where an ES-P obtains a live stream in P2P mode according to an embodiment of the invention. The procedure includes:
1. The ES-P sends a data request to the RRS-P, requesting streaming data;
2. The RRS-P selects a CS-P or other ES-P that is playing the program as the upper level node of the new participant according to the load state and proximity relationship;
3. The RRS-P returns the address information of the upper level node;
4. The ES-P requests information related to the program, such as data packet header information of a media stream in the WMV format, from the upper level node;
5. The upper level node returns service related information;
6. The ES-P sends a data request to the upper level node, requesting streaming media data corresponding to the program;
7. The upper level node sends streaming media data to the ES-P; and
8. The ES-P caches the data locally and delivers the data to the P2P client.

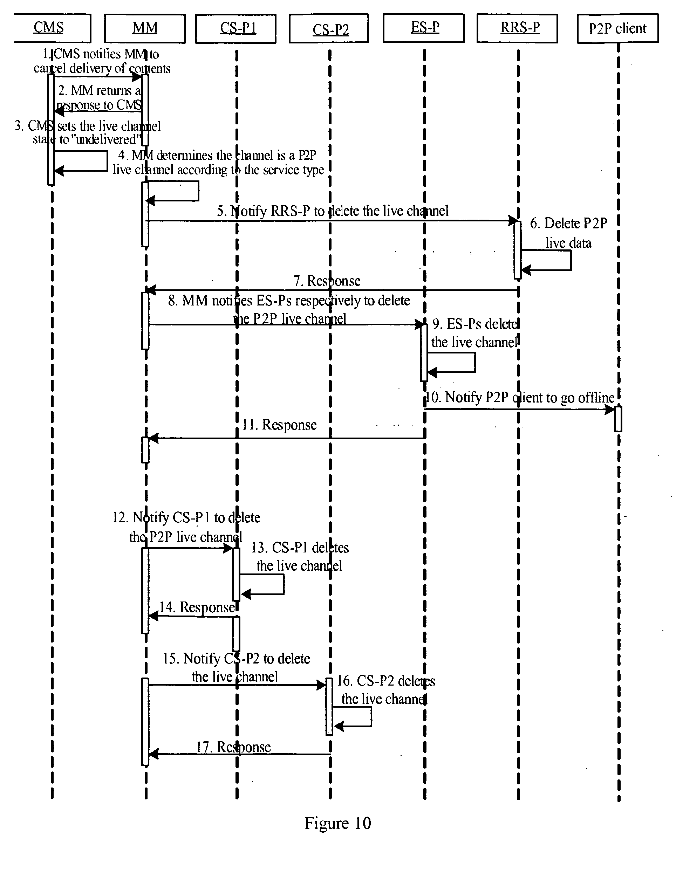

The media delivery system provided in an embodiment of the invention can also cancel the delivery of a P2P live channel, the specific signaling procedure of which is shown in Figure 10, including:
1. An operator logs in to the CMS, specifies a channel and notifies the MM to cancel the delivery of contents;
2. The MM returns a response to the CMS;
3. The CMS sets the live channel state to "undelivered";
4. The MM determines the channel is a P2P live channel according to the service type;
5. The MM notifies the RRS-P to delete the live channel;
6. The RRS receives the notification from the MM and deletes data of the P2P live channel;
7. After successful deletion of the live channel, the RRS notifies the MM;
8. The MM notifies ES-Ps respectively to delete the P2P live channel;
9. The ES-Ps delete the live channel;
10. The ES-Ps notify P2P clients to go offline;
11. All ES-Ps return respective deletion results to the MM;
12. The MM notifies the CS-P1 (active CS-P) to delete the P2P live channel
13. The CS-P1 deletes the live channel;
14. The CS-P1 returns the deletion result to the MM;
15. The MM notifies the CS-P2 (standby CS-P) to delete the P2P live channel;
16. The CS-P2 deletes the live channel; and
17. The CS-P2 returns the deletion result to the MM.

Figures 8, 9 and 10 disclose specific signaling procedures where a live channel is published, where an ES-P obtains streaming data, and where a live channel is cancelled. The following details how a P2P client logs in to the media delivery system and selects a live channel to view.

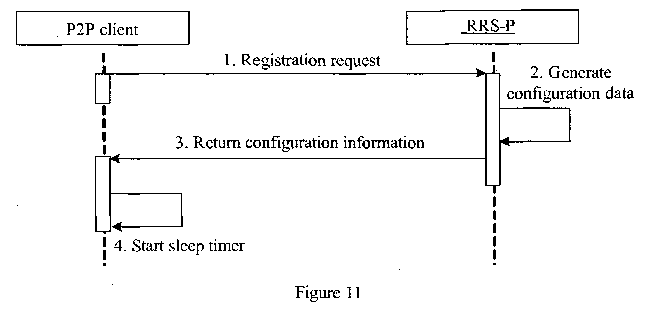

Figure 11 shows the registration signaling procedure of a P2P client according to an embodiment of the invention. The procedure includes:
1. The P2P client sends a registration request message to the RRS-P;
2. The RRS-P assigns a unique identifier to the client and a home client manager (the client manager is located in an ES-P and therefore the address of the ES-P needs to be returned); the RRS-P generates statistic items to be reported and the report time interval, which form configuration information, according to the channel information;
3. The RRS-P returns the configuration information; and
4. The P2P client starts a sleep timer and if the client is always idle before the timer expires, the client transits to the helper state automatically.

To fully use the capabilities of the P2P client, the P2P client has three states in the embodiment of the invention, namely:
(1) Idle: The P2P client enters the idle state upon startup and starts the sleep timer; if the user demands a program, the client transits to the enjoying state and stops the sleep timer; if the sleep timer expires, the client transits to the helper state;
(2) Enjoy: The user is viewing a program and when the user stops viewing the program, the client transits to the helper state; and
(3) Helper: The user is online to provide upload bandwidth and the client transits to the enjoying state when the user demands a program; the client transits to the idle state when receiving a sleep instruction sent by the RRS-P.

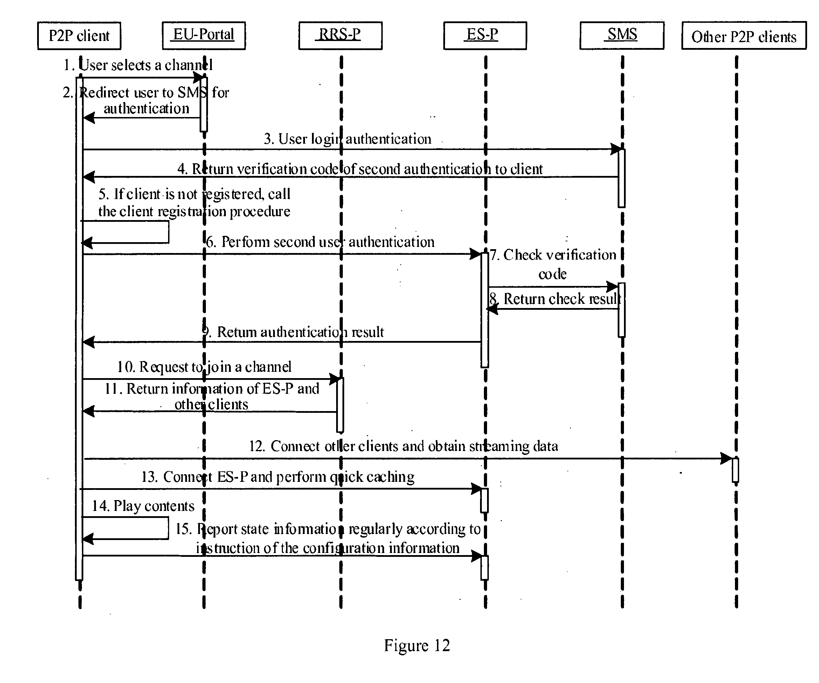

When the P2P client registers with the system, the user can select a desired live channel program to enjoy. The specific signaling procedure where a user selects a live channel program is shown in Figure 12. The procedure includes:
1. The P2P client logs in to the portal and selects a desired channel to view;
2. If the user is not authenticated, the portal redirects the user to the SMS to authenticate the user identity; otherwise, the procedure goes to step 5 directly;
3. The user goes to the SMS for login authentication;
4. After the SMS authenticates the user successfully, the SMS generates a verification code for a second authentication and returns the verification code to the P2P client;
5. If the P2P client is not registered, the client registration procedure shown in Figure 11 is executed;
6. With the verification code returned in step 4, the user is authenticated for a second time by the home client manager in the ES-P, for the purpose of preventing theft links;
7. The ES-P sends the verification code to the SMS for check;
8. The SMS returns the verification result;
9. The ES-P decides whether to allow the user to view the channel according to the verification result;
10. After the second authentication is successful, the P2P client sends a request to the RRS-P, requesting to view a certain live channel;
11. The RRS-P assigns a group of ES-Ps to provide quick caching for the client in the home AS of the P2P client as well as a number of client nodes that are viewing the program and a number of helper nodes, according to the principle of load balance and the principle of proximity; preferably, the selected helper nodes are in the same area as the P2P client and correspond to the live channel selected by the user;
12. The P2P client initiates connection requests to the other clients returned by the RRS-P to obtain data. The connected clients keep the signaling and data connections that are based on the P2P protocol to transport control signaling and streaming data respectively;
13. The P2P client that initiates the demand request selects a proper ES-P as its provider of compensated streams according to the data currently owned by the other connected P2P clients and requests the ES-P to provide data of the earlier period of time (configurable according to network conditions and performance requirements), and the ES-P caches the data quickly (quicker than the rate of playing, configurable according to network conditions and performance requirements); when the P2P client that initiates the demand request is able to obtain data from the other P2P clients, the P2P client removes the connection with the ES-P; a singling channel based on the P2P protocol is always kept between the P2P client that initiates the demand request and the ES-P, so that the P2P client can get help of the ES-P when the P2P client cannot obtain data from the other P2P clients;
14. The P2P client that initiates the demand request caches sliced streaming data from the ES-P and the other P2P clients, assembles the sliced data and then places the data in the player for playing; and
15. The P2P client that initiates the demand request reports state information regularly to the ES-P according to the instruction of the configuration information obtained in the registration procedure.

With the procedure shown in Figure 12, a user can demand a live channel program to view via a P2P client.

After the P2P client logs in to the media delivery system, it is possible that the P2P client does not demand a live channel program. In this case, to fully utilize the capabilities of the P2P client, a timer is set in the P2P client in the embodiment of the invention to implement state transition of the P2P client. When the P2P client becomes a helper node (the state of the P2P client changes to helper), the P2P client obtains media data stream and caches the media data stream locally so as to deliver the data to other P2P clients that request the streaming data.

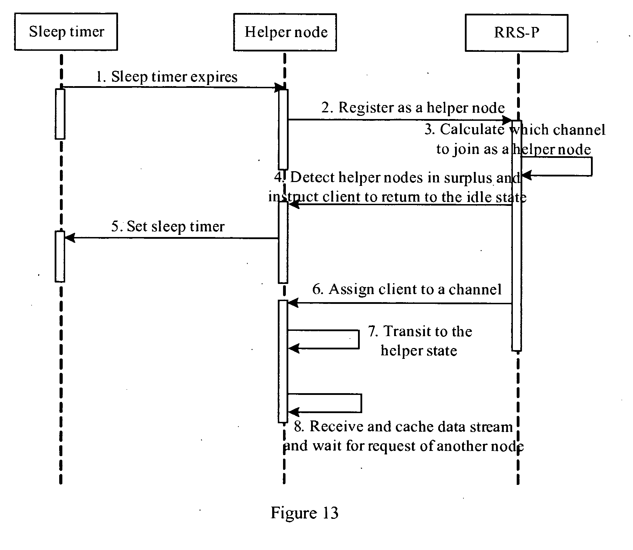

Figure 13 shows a signaling procedure where an idle P2P client applies to be a helper node. The procedure includes:
1. Before the sleep timer expires, the P2P client is in the idle state;
2. When the sleep timer expires, the P2P client registers with the RRS-P as a helper node;
3. The RRS-P performs calculations according to bit streams of the channels and the ratio between current viewers and helper nodes and assigns helper nodes to channels in a balanced way; for example, a specific algorithm is as follows:
   if the program bit rate is V, the mean contribution rate per helper node is vₕ, the mean contribution rate per node in the enjoying state is vₑ, and the current numbers of helper nodes and enjoying nodes in the channel are respectively h and e, then in theory, when h/e = (V-Vₑ))/Vₕ, the helper nodes and enjoying nodes in can satisfy view requirements through mutual help; in practice, a factor p which is a little larger than 1, for example 1.1-1.2),is multiplied on the right side of the equation and then channel with the smallest h/e value is selected as the channel to join;
4. If the channel with the smallest h/e satisfies h/e >= (V-vₑ)/vₕ, which means there are already too many helper nodes in the system, the RRS-P instructs the P2P client that currently requests to be a helper node to return to the idle state;
5. A sleep timer is set in the P2P client and when the sleep timer expires, the above procedure is executed again;
6. If the channel with the smallest h/e does not satisfy h/e >= (V-vₑ)/vₕ, the RRS-P instructs the client to join the selected channel with the smallest h/e, records client information and sets the state of the client to helper;
7. The P2P client transits from the idle state to the helper state and becomes a helper node; and
8. The P2P client joins the specified channel as a helper node to obtain and cache data streams and waits for requests of other nodes;

The procedure where a P2P client joins a channel as a helper node is the same as the procedure where a common node joins the channel. The difference is that the P2P client only obtains part of the data, for example a 50 kbps sub-stream as described earlier. Which sub-stream to transport may be selected randomly by the client or specified in step 3 by the RRS-P randomly or according to a certain algorithm (such as average assignment).

The ratio between helper nodes and enjoying nodes in each channel is not permanent. When the number of enjoying nodes decreases, fewer helper nodes are required. Therefore, there should be a mechanism which reassigns redundant helper nodes to other channels.

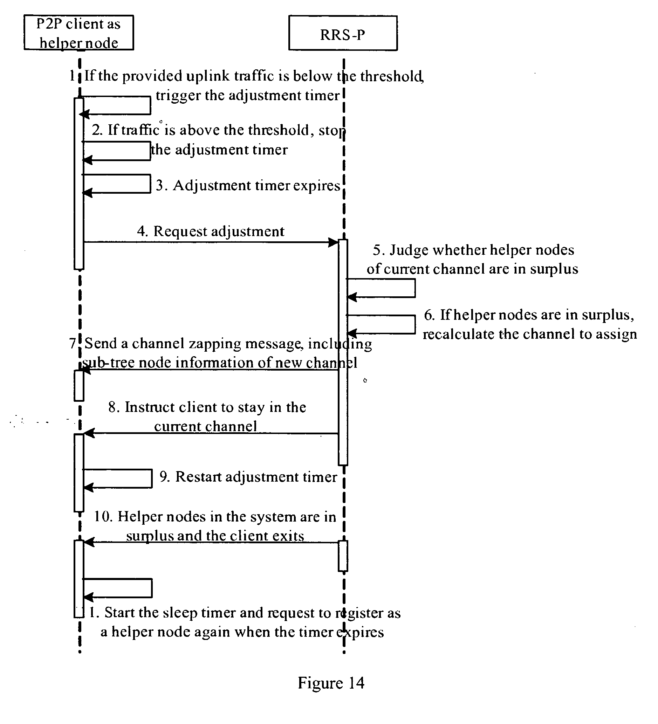

Figure 14 shows a signaling procedure for detecting and reassigning helper nodes. The procedure includes:
1. If service requirements in need of helper nodes drop to a certain extent, for example, when the uplink traffic or the number of connected users is smaller than a preset threshold, an adjustment timer is started, with a system preset timer duration, such as 20 seconds or 30 seconds;
2. If, after the timer is started, service requirements in need of helper nodes exceed the preset threshold, the adjustment timer is stopped;
3. When the adjustment timer expires, the helper node adjustment procedure is started;
4. A helper node sends an adjustment request to the RRS-P;
5. The RRS-P checks whether helper nodes in the channel where the helper node resides are in surplus, that is, whether h/e > p(V-vₑ)/vₕ;
6. If helper nodes are in surplus, a channel with the smallest h/e is reselected and the procedure goes to step 7; otherwise, the procedure goes to step 8; if all channels satisfy h/e > p(V-vₑ))/vₕ, the procedure goes to step 10;
7. The RRS-P sends a channel zapping message, instructing the helper node to exit the current channel and join a new channel; the adjustment process is over;
8. The RRS-P instructs the helper node to stay in the current channel;
9. The helper node restarts the adjustment timer;
10. There are too many helper nodes in the entire network and the RRS-P instructs the helper node to exit and return to the idle state; and
11. The helper node returns to the idle state and restarts the sleep timer; when the sleep timer expires, the node sends a new request for becoming a helper node.

To sum up, a method for playing streaming media according to an embodiment of the invention includes:
The MM publishes a live channel notification to the CS-P and ES-P;
The CS-P obtains streaming data packets from the live source and parses and slices the data packets to generate slice data;
The ES-P obtains and caches slice data from the CS-P and/or other ES-Ps that can provide slice data in P2P mode; and
The P2P client obtains slice data from the ES-P or other P2P clients in P2P mode and requests a local player to play the media.

In embodiments of the invention, the P2P technology is adopted to improve the CDN/MDN in the prior art. By adding the CS-P, ES-P and RRS-P with the P2P client, the system is able to meet the concurrent play requests of a large number of clients and effectively reduce investments in edge servers. Moreover, the media delivery system can converge with the prior CDN/MDN and therefore, the implementation cost is low.

It is apparent that those skilled in the art can make various modifications and variations to the invention without departing from the scope of the invention. The present invention is intended to cover these modifications and variations provided that they fall in the scope of protection defmed by the following claims or their equivalents.

## Claims

1. A method for delivering streaming media, the method comprising:
starting a sleep timer when a first P2P client is idle;
registering, by the first P2P client, with a request routing system (RRS-P) as a helper node of a live channel when the sleep timer expires, wherein the helper node is a P2P client that is able to provide slice data for other P2P client;
joining and obtaining corresponding slice data of the live channel at the first P2P client as the helper node;
caching the slice data locally at the first P2P client; and
delivering, by the first P2P client, the slice data upon receipt of a data request initiated by a second P2P client.

2. The method of claim 1, wherein obtaining corresponding slice data comprises obtaining slice data from an edge server that supports P2P technology (ES-P) or other P2P clients, wherein the ES-P is in a home area of the first P2P client.

3. The method of claim 1, further comprising:
initiating, by the first P2P client, a registration request to the RRS-P; and
receiving, by the first P2P client, a unique identifier assigned by the RRS-P and configuration information generated by the RRS-P.

4. The method of claim 1, further comprising:
starting, by the helper node, an adjustment timer, when an uplink traffic volume provided by the helper node or number of connected users is below a first preset threshold;
initiating an adjustment request to the RRS-P when the adjustment timer expires; and
if the uplink traffic provided by the helper node or the number of connected users is equal to or larger than the first preset threshold and the adjustment timer doesn't expire, stopping the adjustment timer.

5. The method of claim 1, further comprising:
sending, by the second P2P client, a request for joining the live channel;
receiving, by the second P2P client, information of the first P2P client and information of a group of ES-Ps to provide quick caching;
receiving the slice data of the live channel from the first P2P client; and
selecting an ES-P from the group of ES-Ps according to the slice data of the first P2P client, and requesting other slice data from the selected ES-P when the first P2P client does not have the other slice data.

6. A method for delivering streaming media, the method comprising:
receiving a register request to be a helper node from a first peer-to-peer (P2P) client, wherein the helper node is a P2P client that is able to provide slice data for other P2P client;
assigning the first peer-to-peer client in a first live channel according to bit streams of channels and a ratio between current viewers and helper nodes; and
sending information of a node having slice data corresponding to the first live channel to the first peer-to-peer client, wherein the first peer-to-peer client caches the slice data and provides the slice data to another peer-to-peer client.

7. The method of claim 6, further comprising:
receiving a request for joining a live channel from a second peer-to-peer (P2P) client; and
sending information of a helper node corresponding to the live channel to the second peer-to-peer client, wherein the helper node is a peer-to-peer client in a home area of the second P2P client.

8. The method of claim 7, further comprising:
assigning a group of ES-Ps to provide quick caching for the second P2P client, wherein,
the second P2P client selects an ES-P from the group of ES-Ps according to the slice data of the first P2P client, and
requesting additional slice data from the selected ES-P when the first P2P client does not have the additional slice data.

9. The method of claim 6, further comprising:
judging whether a number of helper nodes of a live channel where a first helper node resides exceeds a preset threshold, and, if so, assigning the first helper node to another live channel and returning channel zapping information.

10. The method of claim 7, further comprising:
if it is judged that a number of helper nodes of every live channel exceeds a corresponding threshold, determining that helper nodes of an entire network are in surplus, and instructing the helper node to act as a common P2P client.

11. The method of claim 7, wherein assigning the first peer-to-peer client in a first live channel according to bit streams of channels and a ratio between current viewers and helper nodes comprises:
if the channel with the smallest h/e does not satisfy h/e >= (V-vₑ)/vₕ, the RRS-P instructs the client to join the selected channel with the smallest h/e, wherein V is the program bit rate, vₕ is the mean contribution rate per helper node, vₑ is the mean contribution rate per node in the enjoying state, and h and e are respectively the current numbers of helper nodes and enjoying nodes in the channel; or
if the channel with the smallest h/e satisfies h/e >= (V-vₑ)/vₕ, the RRS-P instructs the P2P client that currently requests to be a helper node to return to the idle state.,

12. The method of claim 6, further comprising:
starting a sleep timer ,by the first P2P client when the first P2P client is idle;
registering, by the first P2P client, with a request routing system (RRS-P) as a helper node of a live channel when the sleep timer expires.

13. A peer-to-peer (P2P) client adapted to perform the method according to any one of claims 1 to 5.

14. A request routing system (RRS-P) adapted to perform the method according to any one of claims 6 to 12.

15. A system comprising a peer-to-peer (P2P) client adapted to perform the method according to any one of claims 1 to 5, and a request routing system (RRS-P) adapted to perform the method according to any one of claims 6 to 12.

## Patentansprüche

1. Verfahren zum Abliefern von Streaming-Medien, wobei das Verfahren Folgendes umfasst:
Starten eines Sleep-Timers, wenn ein erster P2P-Client leerläuft;
Registrieren durch den ersten P2P-Client bei einem Anforderungsroutingsystem bzw. RRS-P als Helferknoten eines Live-Kanals, wenn der Sleep-Timer abläuft, wobei der Helferknoten ein P2P-Client ist, der in der Lage ist, Slice-Daten für den anderen P2P-Client bereitzustellen;
Sichanschließen an den Live-Kanal und Erhalten entsprechender Slice-Daten von diesem in dem ersten P2P-Client als der Helferknoten;
lokales Cache-Speichern der Slice-Daten in dem ersten P2P-Client; und
Abliefern der Slice-Daten durch den ersten P2P-Client beim Empfang einer durch einen zweiten P2P-Client eingeleiteten Datenanforderung.

2. Verfahren nach Anspruch 1, wobei das Erhalten von entsprechenden Slice-Daten das Erhalten von Slice-Daten von einem Randserver, der P2P-Technologie unterstützt, bzw. ES-P oder anderen P2P-Clients umfasst, wobei sich der ES-P in einem Heimatbereich des ersten P2P-Clients befindet.

3. Verfahren nach Anspruch 1, ferner umfassend:
Einleiten einer Registrationsanforderung durch den ersten P2P-Client an das RRS-P; und
Empfangen einer durch das RRS-P zugewiesenen eindeutigen Kennung und von durch das RRS-P erzeugten Konfigurationsinformationen durch den ersten P2P-Client.

4. Verfahren nach Anspruch 1, ferner umfassend:
Starten eines Justierungstimers durch den Helferknoten, wenn ein durch den Helferknoten bereitgestelltes Aufwärtsstrecken-Verkehrsvolumen oder die Anzahl verbundender Benutzer unter einer ersten voreingestellten Schwelle liegt;
Einleiten einer Justierungsanforderung an das RRS-P, wenn der Justierungstimer abläuft; und
wenn der durch den Helferknoten bereitgestellte Aufwärtsstreckenverkehr oder die Anzahl verbundener Benutzer größer oder gleich der ersten voreingestellten Schwelle ist und der Justierungstimer nicht abläuft, stoppen des Justierungstimers.

5. Verfahren nach Anspruch 1, ferner umfassend:
Senden einer Anforderung durch den zweiten P2P-Client, sich dem Live-Kanal anzuschließen;
Empfangen von Informationen des ersten P2P-Clients und von Informationen von einer Gruppe von ES-P durch den zweiten P2P-Client, um schnelle Cache-Speicherung bereitzustellen;
Empfangen der Slice-Daten des Live-Kanals von dem ersten P2P-Client, und
Auswählen eines ES-P aus der Gruppe von ES-P gemäß den Slice-Daten des ersten P2P-Clients und Anfordern von anderen Slice-Daten von dem ausgewählten ES-P, wenn der erste P2P-Client nicht über die anderen Slice-Daten verfügt.

6. Verfahren zum Abliefern von Streaming-Medien, wobei das Verfahren Folgendes umfasst:
Empfangen einer Registrieranforderung, ein Helferknoten zu sein, von einem ersten "Peer-to-Peer"- bzw. P2P-Client, wobei der Helferknoten ein P2P-Client ist, der in der Lage ist, Slice-Daten für den anderen P2P-Client bereitzustellen;
Zuweisen des ersten "Peer-to-Peer"-Clients in einem ersten Live-Kanal gemäß Bitströmen von Kanälen und einem Verhältnis zwischen aktuellen Zuschauern und Helferknoten; und
Senden von Informationen eines Knotens, der über dem ersten Live-Kanal entsprechende Slice-Daten verfügt, zu dem ersten "Peer-to-Peer"-Client, wobei der erste "Peer-to-Peer"-Client die Slice-Daten Cache-speichert und die Slice-Daten einem anderen "Peer-to-Peer"-Client bereitstellt.

7. Verfahren nach Anspruch 6, ferner umfassend:
Empfangen einer Anforderung, sich einem Live-Kanal anzuschließen, von einem zweiten "Peer-to-Peer"- bzw. P2P-Client; und
Senden von Informationen von einem dem Live-Kanal entsprechenden Helferknoten zu dem zweiten "Peer-to-Peer"-Client, wobei der Helferknoten ein "Peer-to-Peer"-Client in einem Heimatbereich des zweiten P2P-Clients ist.

8. Verfahren nach Anspruch 7, ferner umfassend:
Zuweisen einer Gruppe von ES-P, um schnelle Cache-Speicherung für den zweiten P2P-Client bereitzustellen, wobei
der zweite P2P-Client einen ES-P aus der Gruppe von ES-P gemäß den Slice-Daten des ersten P2P-Clients auswählt und
Anfordern von zusätzlichen Slice-Daten von dem ausgewählten ES-P, wenn der erste P2P-Client nicht über die zusätzlichen Slice-Daten verfügt.

9. Verfahren nach Anspruch 6, ferner umfassend:
Beurteilen, ob eine Anzahl von Helferknoten eines Live-Kanals, wo ein erster Helferknoten residiert, eine voreingestellte Schwelle übersteigt, und wenn dem so ist, Zuweisen des ersten Helferknotens zu einem anderen Live-Kanal und Zurückgeben von Kanal-Zapping-Informationen.

10. Verfahren nach Anspruch 7, ferner umfassend:
wenn beurteilt wird, dass eine Anzahl von Helferknoten jedes Live-Kanals eine entsprechende Schwelle übersteigt, Bestimmen, dass Helferknoten eines gesamten Netzwerks überschüssig sind, und Anweisen des Helferknotens, als gemeinsamer P2P-Client zu wirken.

11. Verfahren nach Anspruch 7, wobei das Zuweisen des ersten "Peer-to-Peer"-Clients in einem ersten Live-Kanal gemäß Bitströmen von Kanälen und einem Verhältnis zwischen aktuellen Zuschauern und Helferknoten Folgendes umfasst:
wenn der Kanal mit dem kleinsten h/e nicht h/e >= (V-vₑ)/vₕ erfiillt, weist das RRS-P den Client an, sich dem ausgewählten Kanal mit dem kleinsten h/e anzuschließen, wobei V die Programmbitrate ist, vₕ die mittlere Beitragsrate pro Helferknoten ist, vₑ die mittlere Beitragsrate pro Knoten im Genießzustand ist und h und e die aktuelle Anzahl der Helferknoten bzw. Genießknoten in dem Kanal sind; und
wenn der Kanal mit dem kleinsten h/e h/e >= (V-vₑ)/vₕ erfiillt, weist das RRS-P den P2P-Client, der gerade anfordert, ein Helferknoten zu sein, an, in den Leerlaufzustand zurückzukehren.

12. Verfahren nach Anspruch 6, ferner umfassend:
Starten eines Sleep-Timers durch den ersten P2P-Client, wenn der erste P2P-Client leerläuft;
Registrieren durch den ersten P2P-Client bei einem Anforderungsroutingsystem bzw. RRS-P als Helferknoten eines Live-Kanals, wenn der Sleep-Timer abläuft.

13. "Peer-to-Peer"- bzw. P2P-Client, der dafür ausgelegt ist, das Verfahren nach einem der Ansprüche 1 bis 5 auszuführen.

14. Anforderungsroutingsystem bzw. RRS-P, das dafür ausgelegt ist, das Verfahren nach einem der Ansprüche 6 bis 12 auszuführen.

15. System, das einen "Peer-to-Peer"- bzw. P2P-Client, der dafür ausgelegt ist, das Verfahren nach einem der Ansprüche 1 bis 5 auszuführen, und ein Anforderungsroutingsystem bzw. RRS-P, das dafür ausgelegt ist, das Verfahren nach einem der Ansprüche 6 bis 12 auszuführen, umfasst.

## Revendications

1. Procédé de distribution de média diffusé en flux continu, le procédé comprenant les étapes consistant à :
déclencher un temporisateur de veille lorsqu'un premier client P2P est au repos ;
s'enregistrer, par le premier client P2P, auprès d'un système de routage de demandes (RRS-P) comme noeud auxiliaire d'un canal actif à l'expiration du temporisateur de veille, lequel noeud auxiliaire est un client P2P apte à fournir des données en tranches pour un autre client P2P ;
intégrer le canal actif et obtenir des données en tranches correspondantes du canal actif au niveau du premier client P2P comme noeud auxiliaire ;
mettre en cache les données en tranches localement au niveau du premier client P2P ; et
distribuer, par le premier client P2P, les données en tranches sur réception d'une demande de données lancée par un deuxième client P2P.

2. Procédé selon la revendication 1, dans lequel l'étape consistant à obtenir des données en tranches correspondantes comprend l'étape consistant à obtenir des données en tranches auprès d'un serveur de bordure qui prend en charge la technologie P2P (ES-P) ou d'autres clients P2P, lequel ES-P se situe dans une zone de rattachement du premier client P2P.

3. Procédé selon la revendication 1, comprenant en outre les étapes consistant à :
lancer, par le premier client P2P, une demande d'enregistrement à destination du RRS-P ; et
recevoir, par le premier client P2P, un identifiant unique attribué par le RRS-P et des informations de configuration générées par le RRS-P.

4. Procédé selon la revendication 1, comprenant en outre les étapes consistant à :
déclencher, par le noeud auxiliaire, un temporisateur d'ajustement lorsqu'un volume de trafic en liaison montante fourni par le noeud auxiliaire ou un nombre d'utilisateurs connectés est inférieur à un premier seuil prédéfini ;
lancer une demande d'ajustement à destination du RRS-P à l'expiration du temporisateur d'ajustement ; et
si le trafic en liaison montante fourni par le noeud auxiliaire ou le nombre d'utilisateurs connectés est supérieur ou égal au premier seuil prédéfini et le temporisateur d'ajustement n'a pas expiré, interrompre le temporisateur d'ajustement.

5. Procédé selon la revendication 1, comprenant en outre les étapes consistant à :
envoyer, par le deuxième client P2P, une demande d'intégration au canal actif ;
recevoir, par le deuxième client P2P, des informations relatives au premier client P2P et des informations relatives à un groupe d'ES-P pour l'exécution d'une mise en cache rapide ;
recevoir les données en tranches du canal actif en provenance du premier client P2P ; et
sélectionner un ES-P parmi le groupe d'ES-P en fonction des données en tranches du premier client P2P, et demander d'autres données en tranches auprès de l'ES-P sélectionné lorsque le premier client P2P ne dispose pas des autres données en tranches.

6. Procédé de distribution de média diffusé en flux continu, le procédé comprenant les étapes consistant à :
recevoir une demande d'enregistrement comme noeud auxiliaire en provenance d'un premier client en pair à pair (P2P), lequel noeud auxiliaire est un client P2P apte à fournir des données en tranches pour un autre client P2P ;
affecter le premier client en pair à pair à un premier canal actif en fonction de flux binaires de canaux et d'un rapport entre des visionneurs et des noeuds auxiliaires actuels ; et
envoyer au premier client en pair à pair des informations relatives à un noeud disposant de données en tranches correspondant au premier canal actif, lequel premier client en pair à pair met en cache les données en tranches et fournit les données en tranches à un autre client en pair à pair.

7. Procédé selon la revendication 6, comprenant en outre les étapes consistant à :
recevoir une demande d'intégration à un canal actif en provenance d'un deuxième client en pair à pair (P2P) ; et
envoyer au deuxième client en pair à pair des informations relatives à un noeud auxiliaire correspondant au canal actif, lequel noeud auxiliaire est un client en pair à pair dans une zone de rattachement du deuxième client P2P.

8. Procédé selon la revendication 7, comprenant en outre les étapes consistant à :
affecter un groupe d'ES-P pour l'exécution d'une mise en cache rapide pour le deuxième client P2P,
lequel deuxième client P2P sélectionne un ES-P parmi le groupe d'ES-P en fonction des données en tranches du premier client P2P, et
demander des données en tranches supplémentaires auprès de l'ES-P sélectionné lorsque le premier client P2P ne dispose pas des données en tranches supplémentaires.

9. Procédé selon la revendication 6, comprenant en outre l'étape consistant à :
déterminer si un nombre de noeuds auxiliaires d'un canal actif dans lequel réside un premier noeud auxiliaire excède un seuil prédéfini et, le cas échéant, affecter le premier noeud auxiliaire à un autre canal actif et renvoyer des informations de changement de canal.

10. Procédé selon la revendication 7, comprenant en outre l'étape consistant à :
s'il est déterminé qu'un nombre de noeuds auxiliaires de chaque canal actif excède un seuil correspondant, établir que des noeuds auxiliaires d'un réseau tout entier sont superflus, et donner au noeud auxiliaire l'ordre d'assumer le rôle de client P2P commun.

11. Procédé selon la revendication 7, dans lequel l'étape consistant à affecter le premier client en pair à pair à un premier canal actif en fonction de flux binaires de canaux et d'un rapport entre des visionneurs et des noeuds auxiliaires actuels comprend l'étape suivante :
si le canal possédant le plus petit rapport h/e ne vérifie pas h/e >= (V-vₑ)/vₕ, le RRS-P donne au client l'ordre d'intégrer le canal sélectionné possédant le plus petit rapport h/e, V représentant le débit binaire du programme, vₕ représentant le débit de contribution moyen de chaque noeud auxiliaire, vₑ représentant le débit de contribution moyen de chaque noeud dans l'état bénéficiaire, et h et e représentant respectivement les nombres actuels de noeuds auxiliaires et de noeuds bénéficiaires dans le canal ; ou
si le canal possédant le plus petit rapport h/e vérifie h/e >= (V-vₑ)/vₕ, le RRS-P donne au client P2P qui demande actuellement d'assumer le rôle de noeud auxiliaire l'ordre de repasser dans l'état de repos.

12. Procédé selon la revendication 6, comprenant en outre les étapes consistant à :
déclencher un temporisateur de veille, par le premier client P2P, lorsque le premier client P2P est au repos ;
s'enregistrer, par le premier client P2P, auprès d'un système de routage de demandes (RRS-P) comme noeud auxiliaire d'un canal actif à l'expiration du temporisateur de veille.

13. Client en pair à pair (P2P) adapté à mettre en oeuvre le procédé selon l'une quelconque des revendications 1 à 5.

14. Système de routage de demandes (RRS-P) adapté à mettre en oeuvre le procédé selon l'une quelconque des revendications 6 à 12.

15. Système comprenant un client en pair à pair (P2P) adapté à mettre en oeuvre le procédé selon l'une quelconque des revendications 1 à 5, et un système de routage de demandes (RRS-P) adapté à mettre en oeuvre le procédé selon l'une quelconque des revendications 6 à 12.
